Europäisches Patentamt

European Patent Office

Office européen des brevets

(11) Publication number: **0 292 316**
**A2**

## EUROPEAN PATENT APPLICATION

(21) Application number: 88304599.9

(22) Date of filing: 20.05.88

(51) Int. Cl.⁴: **C 08 L 67/06**
C 08 J 5/24, C 08 L 75/04

(30) Priority: 22.05.87 ZA 873678   29.09.87 ZA 877323

(43) Date of publication of application:
**23.11.88 Bulletin 88/47**

(84) Designated Contracting States:
AT BE CH DE ES FR GB GR IT LI LU NL SE

(71) Applicant: **UYS EN CHRISTIANA HARSE
(PROPRIETARY) LIMITED
73A Pretorius Street
Christiana Transvaal Province (ZA)**

(72) Inventor: **Uys, Gert Diederick Scherman
5 River Street
Christiana Transvaal Province (ZA)**

(74) Representative: **Ellis-Jones, Patrick George Armine et al
J.A. KEMP & CO. 14 South Square Gray's Inn
London WC1R 5EU (GB)**

A request for correction of claim no. 8 has been filed pursuant to Rule 88 EPC. A decision on the request will be taken during the proceedings before the Examining Division (Guidelines for Examination in the EPO, A-V, 2.2).

(54) **Composite material.**

(57) A composite material which includes a polyester resin as a matrix and comminuted expanded polyurethane, dispersed within the matrix. The composite material includes at least one fibrous re-inforcing material dispersed within the matrix. The fibrous material may be selected from the group consisting in glass fibres, carbon fibres, polyamide fibres, cotton fibres and/or wool fibres. The composite material also includes at least one additive admixed with the resin, to impart desired properties to the composite material. The additive is selected from the group consisting in magnesium silicide, talc, graphite, carbon black, silica, kaolin, acid-resistant resinous material, a fire-retardant, thixotropic agent, and a pigment.

## Description

## COMPOSITE MATERIAL

THIS INVENTION relates to a composite material.

According to the invention there is provided a composite material which includes

a polyester resin as a matrix; and

particulate expanded polyurethane, dispersed within the matrix.

Unless otherwise indicated, by "%" in this specification is meant percentage by mass of a particular component, based on the total mass of the composite material.

The material may comprise

between 1 and 90% of the polyester resin matrix; and

between 1 and 90% of comminuted expanded or foamed polyurethane.

More particularly, the material may comprise

between 1 and 70%, eg between 50 and 63%, of the polyester resin matrix; and

between 1 and 30%, eg between 10 and 28%, of the comminuted expanded polyurethane.

The comminuted or particulate expanded polyurethane may comprise granulated and/or powdered foamed polyurethane, which may have a particle size ranging from about dust or powder size to about 5 mm. The density of the foamed polyurethane can be varied, as desired, ie it can be of low or high density.

The composite material may include at least one fibrous re-inforcing material dispersed within the matrix. The fibrous material may be selected from the group comprising glass fibres, carbon fibres, polyamide fibres, cotton fibres and/or wool fibres, and the like. The proportion of the fibrous reinforcing material, when present in the composition, may be between 1 and 60% by mass.

In one embodiment of the invention, the fibres may be arranged in a relatively dense cohesive form. The fibrous reinforcing substance may then be in elongate form or the like, when the fibres are arranged in unidirectional fashion, or in web or mat-like form, when the fibres are arranged in random fashion. The fibrous substance may then be a woven web, or the like. In another embodiment of the invention, the fibres may be in relatively disassociated form and dispersed randomly throughout the matrix. The fibres may be in milled form, or in the form of chopped strands, having a particle size or length ranging from about 1 mm to about 7 mm.

More particularly, the proportion of the fibrous reinforcing material, when present in the composition, may be between 4 and 20% by mass.

The composite material may include at least one additive admixed with the resin, to impart desired properties to the composite material. The additive may be selected from the group consisting in magnesium silicide, talc, graphite, carbon black, silica, kaolin, acid-resistant resinous material, a fire-retardant, thixotropic agent, and a pigment. The proportion of the additive when present in the composition, may be between 1 and 40%, eg between 2 and 36%.

More particularly, the composite material may comprise

between 1 and 70% of the polyester resin matrix;

between 1 and 30% of the comminuted expanded polyurethane;

between 1 and 60% of the fibrous reinforcing material; and

between 1 and 40% of the optional additive.

In one embodiment of the invention the composite material may comprise

between 10 and 60% of the polyester resin matrix;

between 10 and 60% of the comminuted expanded polyurethane;

between 5 and 40% of the fibrous reinforcing material; and

between 1 and 30% of the optional additive.

The composite material may be of mouldable consistency.

The composite material may include a curing catalyst for the resin, admixed with the resin, the material then being in mouldable settable form.

However, it is envisaged that the composite material can be provided without the catalyst, if desired. A user can then add a suitable curing catalyst, which is hence provided separately, to form an admixture. The admixture can then be moulded into a desired shape and the resinous matrix rendered settable.

The curing catalyst may be a thermosetting catalyst. In one embodiment it may be such that the rendering of the matrix into settable form is by heating and allowing it to cool. In another embodiment it may be such that the matrix can set at room temperature. In a further embodiment the rendering of the matrix into settable form can be by subjecting it to radiation in the microwave region of the electromagnetic spectrum.

The mixture may also include a filler material.

The invention will now be described by way of the following non-limiting examples:

Most of the components of the composite material used in the examples are commercially available from NCS Plastics (Proprietary) Limited, of Wynburg, Sandton, Transvaal Province, RSA (hereinafter referred to as NCS).

### EXAMPLE 1

A mouldable settable composite material in accordance with the invention was made up by admixing the following:

About 50% polyester resin as a matrix, available in South Africa from NCS under the name POLYESTER 400";

About 12% comminuted expanded polyurethane, such as comminuted polyurethane foam, available in South Africa from NCS, and having an average particle size of from dust or powder size to about $1\frac{1}{2}$ mm;

About 9% fibrous reinforcing material, in the form of commercially available glass fibrous web, available in South Africa from NCS;

About 24% magnesium silicide ($Mg_2Si$), a commercially available mineral product; and

About 3% talc, available in South Africa from NCS.

The material includes, admixed therewith, about 2% methyl ethyl ketone peroxide curing catalyst for the matrix, available in South Africa from NCS under the trade name CATALYST M. This catalyst can be supplied separately to the material, and can be admixed with the material, before the material is moulded, whereafter the material is allowed to set for about $\frac{1}{2}$ hour to 2 hours.

Instead, the material may include, admixed therewith, about 2% thermosetting catalyst for the matrix, available in South Africa from NCS under the name tert. butyl perbenzoate. The thermosetting catalyst may be admixed with the components of the material, to form a stable thermosetting paste which may, when desired, be heated in a mould eg in an oven, to a temperature of about 130°, so as to set.

The admixing is effected as follows: The dry components of the material are mixed together and then added to the resinous matrix. Further mixing is then effected in a vacuum chamber to form a mouldable settable mixture, in the form of a paste.

The mouldable settable mixture is introduced into a suitable mould, eg by pressing or pouring into a mould.

The Applicant has found that this composition forms an abrasion-resistant finished product which is suitable for the manufacture of conveyor belt rollers, snow or water ski's, and sprocket gears.

## EXAMPLE 2

A mouldable settable composite material was made up by admixing the following:

About 60% polyester resin as a matrix, available in South Africa from NCS under the name POLYESTER 400;

About 14% comminuted expanded polyurethane, such as comminuted polyurethane foam, available in South Africa from NCS, and having an average particle size of from dust or powder size to about $1\frac{1}{2}$ mm;

About 15% fibrous reinforcing material, in the form of commercially available glass fibrous web available in South Africa from NCS;

About 7% commercially available graphite; and

About 2% talc, available in South Africa from NCS.

The material includes a catalyst, as described in Example 1.

The components and desired catalyst are admixed in the same manner as described in Example 1, and a finished article moulded therefrom as in Example 1.

The Applicant has found that, this composition is suitable for the manufacture of reduction gears and bushes.

## EXAMPLE 3

The Applicant has found that, in the manufacture of doors, the following composite material of the invention is suitable for the manufacture of a skin or outer portion of the door;

About 50% polyester resin as a matrix, available in South Africa from NCS under the name POLYESTER 400;

About 28% comminuted expanded polyurethane, such as comminuted polyurethane foam, available in South Africa from NCS, and having an average particle size of from dust or powder size to about $1\frac{1}{2}$ mm; and

About 20% fibrous reinforcing material, in the form of commercially available glass fibrous web available in South Africa from NCS.

The material includes a desired catalyst, as described in Example 1.

The components and desired catalyst are admixed in the same manner as described in Example 1.

This mouldable settable composite material can be impregnated into woven roving reinforcement, to form a skin or outer portion of the door.

The core, or inner portion, of the door is moulded out of a mixture consisting of 10-15% by mass polyester resin, and 85-90% by mass filler material such as wood wool, maize straw, wheat straw, peanut shells, feathers, or the like.

## EXAMPLE 4

Applicant has found that, for the manufacture of roof tiles, the following composite material in accordance with the invention is suitable:

About 50% polyester resin as a matrix, available in South Africa from NCS under the name POLYESTER 400;

About 12% comminuted expanded polyurethane, such as polyurethane foam, available in South Africa from NCS, and having an average particle size of from dust or powder size to about $1\frac{1}{2}$ mm;

About 9% fibrous reinforcing material, in the form of commercial fibre glass, available in South Africa from NCS; and

About 4% commercially available carbon black.

The material includes a desired catalyst, as described in Example 1.

The components and desired catalyst are admixed in the same manner as described in Example 1, and the composite material includes about 23% filler material in the form of milled cotton or low-grade wool.

This mouldable settable composite material can be impregnated into glass fibre strand reinforcement, to form roof tiles.


EXAMPLE 5

The Applicant has found that, for the manufacture of pipes or tubing, the following composite material in accordance with the invention is suitable:

About 57% polyester resin as a matrix, in the form of an acid-resistant polyester resin, available in South Africa from NCS under the name POLYESTER 600;

About 20% comminuted expanded polyurethane, such as polyurethane foam, available in South Africa from NCS, and having an average particle size of from dust or powder size to about $1\frac{1}{2}$ mm;

About 15% fibrous reinforcing material, in the form of commercial fibre glass, available in South Africa from NCS; and

About 6% talc, available in South Africa from NCS.

The material includes a desired catalyst, as described in Example 1.

The components and desired catalyst are admixed in the same manner as described in Example 1, and the composite material can be impregnated into woven roving re-inforcement, to form pipes or tubing.


Example 6

Applicant has found that, for the manufacture of heat resistant articles, capable of resisting temperatures in excess of 2000°C for a period of 90 seconds, the following composite material in accordance with the invention is suitable:

About 55% polyester resin as a matrix, available in South Africa from NCS under the name POLYESTER 400;

About 4,5% comminuted expanded polyurethane, such as polyurethane foam, available in South Africa from NCS, having an average particle size from dust or powder size to about $1\frac{1}{2}$ mm, and an average density of about 80 kg/m$^3$;

About 4,5% fibrous reinforcing material, in the form of milled commercial fibreglass, available in South Africa from NCS;

About 11% silica, in the form of sand;

About 15,4% powdered magnesium silicide;

About 2,20% commercially available talc, in powdered form; and

About 7,4% commercially available kaolin in powdered form.

The material includes about 2-4% tertiary butyl perbenzoate, thermosetting heat-curing catalyst. The components and catalysts are admixed, moulded, and caused to set in the same manner as described in Example 1.


Example 7

Applicant has found that, for the manufacture of a material having favourable tensile strength, flexural and impact characteristics, and dielectric strength, electrical insulation resistance and electrical surface and volume resistivity properties, the following composite material in accordance with the invention is suitable:

About 74% polyester resin as a matrix, available in South Africa from NCS under the name POLYESTER 400;

About 8% by mass of comminuted expanded polyurethane, such as polyurethane foam, available in South Africa from NCS, and having an average particle size of from dust or powder size to about $1\frac{1}{2}$ mm and an average density of about 200 kg/m$^3$;

About 12% by mass of fibrous reinforcing material, in the form of commercial fibreglass which has been chopped into strands having an average length of about 5 mm;

About 5% talc, in powdered form, available in South Africa from NCS; and

About 1% of a pigment.

The material includes about 2-4% of methyl ethyl ketone peroxide, room temperature curing catalyst. The components and catalyst are admixed, moulded and caused to set in the same manner as described in Example 1.

## Example 8

Applicant has found that, for the manufacture of a coating suitable to coat, eg, steel, and having a high resistance to strong mineral acids and alkalis, and high impact resistance, the following composite material in accordance with the invention is suitable:

About 63% polyester resin as a matrix, in the form of acid-resistant polyester resin available in South Africa from NCS under the name POLYESTER 600;

About 8% comminuted expanded polyurethane, such as polyurethane foam, available in South Africa from NCS, and having an average particle size of from dust or powder size to about $1\frac{1}{2}$ mm and having an average density of about 80 kg/m³;

About 4,5% fibrous reinforcing material, in the form of commercial fibreglass which has been chopped into strands having an average length of about 5 mm;

About 1,5% talc, in powdered form, available in South Africa from NCS; and

About 1% pigment; and

About 22% kaolin.

The components are admixed in the same manner as described in Example 1. Before the material is applied to a surface to be coated about 2-4% of methyl ethyl ketone peroxide catalyst is admixed with the material. The composite material is then applied to a surface to be coated, by conventional means such as a paint brush, paint rollers, and the like.

Thus, when the composite material is to be used in applications where high mechanical and electrical breakdown properties, and high heat-resistance, are required, the mass ratio of polyester resin:comminuted polyurethane foam varies from about 9:1 to about 11:1, the mass ratio of polyester resin to fibrous reinforcing material from about 6:1 to about 30:1, and the mass ratio of polyester resin to additive(s) from about 1:1 to about 30:1. In other applications, eg the manufacture of reduction gears, roof tiles, tubing, etc, the mass ratio of polyester resin:comminuted polyurethane foam varies from about 2:1 to about 4:1, the mass ratio of polyester resin to fibrous reinforcing material from about 2:1 to about 5:1, and the mass ratio of polyester resin to additive(s) from about 2:1 to about 13:1.

A colouring agent can be added to the mouldable mix, in a proportion of typically about 1% by mass of the composition, and the resultant product has been found to be colour fast.

The Applicant believes that the composite material of the invention has good compressive, flexural, tensile and interlaminar shear strength, as well as impact resistant characteristics, eg it is not readily shattered even when the finished product is relatively thin eg 5-12 mm. The finished product also has good electrical insulating properties, dielectric strength, electrical surface and volume resistivity.

In this regard, certain tests on the material according to the invention were conducted on the Applicant's behalf by the South African Bureau of Standards (SABS) and the Council for Scientific and Industrial Research (CSIR). The nature and results of the tests are set out below.

The following tests for ultimate tensile stress, and for flexural and impact characteristics, were conducted by the SABS on test pieces taken from a 300 mm x 300 mm x 3 mm thick tile of material according to the invention, manufactured according to Example 6. The material was impregnated into three layers of woven fibre glass mat having a density of 450 g/m², to form the tile.

## Ultimate Tensile Stress

A tensile test piece was machined from the tile and the tensile test was done using a calibrated tensile testing machine. The results obtained were as follows:

| Maximum Load, kN | Ultimate Tensile Stress, MPa |
|:---:|:---:|
| 5,15 | 60 |

## Flexural Characteristics

A 120 mm by 50,8 mm piece cut from the tile was supported on two points, placed 100 mm apart. A central force across the width was then applied halfway between the two points and the following values derived:

force/deflection - 89 N/mm

deflection before permanent set - 12,1 mm

force withstood before permanent set - 1,4 kN

## Impact Characteristics

A test piece was cut from the tile and supported on a platform having a rectangular hole of 100 mm by 145 mm. An iron ball of a diameter of 92 mm and a mass of 2,767 kg was dropped perpendicularly from increasing heights on the sample at the centre of the supporting square. The following values were obtained:

| Height Dropped, metres | Kinetic Energy, J | Remarks |
|---|---|---|
| 1 | 27 | Small cracks at back. |
| 2 | 54 | Small cracks at front and back. |
| 3 | 81 | Complete failure. |

Further tests were also carried out on the Applicant's behalf by the SABS, according to standards set down by the American Society for Testing and Materials (ASTM), in connection with electrical surface and volume resistivity, electrical insulation resistance and dielectric breakdown voltage. The tests were conducted on a 240 mm X 240 mm X 3 mm thick sample tile of material according to the invention manufactured according to Example 7. The following results were obtained:

| Tests | Results |
|---|---|
| ASTM 257 | |
| Surface Resistivity: ohm cm | $184,8 \times 10^{12}$ |
| Insulation Resistance, ohm | $752,833 \times 10^{9}$ |
| Volume Resistivity, ohm cm | $29,864 \times 10^{12}$ |
| ASTM 149 | |
| Breakdown Voltage | 23,784 kV/mm |

Tests were also conducted on the Applicant's behalf by the CSIR, according to standards set down by the ASTM, in connection with ultimate tensile stress, interlaminar shear strength and fibre volume fraction. The nature and results of the tests are set out in tabular form below.

The results set out in Table 1 were obtained by conducting tests according to ASTM D2344-76 on material according to the invention, manufactured according to Example 6. The material was impregnated into four layers of woven fibre glass mat having a density of 450 g/m², to form a sample sheet of material, from which test specimens were cut.

Table 1

| Property | Mean, $\bar{x}$ | Standard Deviation, $s$ | Coefficient of of Variation $s/\bar{x}$ (%) | Number of Specimens, $n$ |
|---|---|---|---|---|
| Tensile Strength, $S_{11+}$ (MPa) | 128 | 8,73 | 6,80 | 10 |
| Young's Modulus, $E_{11}$ (GPa) | 11,2 | 1,30 | 11,6 | 10 |
| Interlaminar Shear Strength, $S_{13}$ (MPa) | 24,6 | 2,51 | 10,2 | 20 |
| Fibre Volume Fraction, $V_f$ | 0,20 | | | |

The results set out in Table 2 were obtained by conducting tests according to ASTM D3039-76 on material according to the invention, manufactured according to Example 6, except that the material contained no magnesium silicide, and about 70,4% POLYESTER 400 resin as a matrix. The material was impregnated into four layers of woven fibre glass mat having a density of 450 g/m$^2$, to form a sample sheet of material, from which test specimens were cut.

## Table 2

| Property | Mean, $\bar{x}$ | Standard Deviation, $s$ | Coefficient of Variation $s/\bar{x}$ (%) | Number of Specimens, $n$ |
|---|---|---|---|---|
| Tensile Strength, $S_{11+}$ (MPa) | 182 | 12,3 | 6,78 | 10 |
| Young's Modulus, $E_{11}$ (GPa) | 13,9 | 1,31 | 9,38 | 10 |
| Interlaminar Shear Strength, $S_{13}$ (MPa) | 28,4 | 1,83 | 6,42 | 20 |
| Fibre Volume Fraction, $V_f$ | 0,23 | | | |

In both of the above tests, fibre volume fraction was determined by resin burn-off tests.

Hence, the Applicant believes that the composite material is suitable for manufacturing a wide range of articles, including structural members such as I-beams, channel sections, angle sections, electrical insulators and the like.

The finished product is also relatively lightweight eg specific gravity of about 1,4, compared to the specific gravity of aluminium, which is 1,7. Furthermore, the Shore D hardness of standard epoxy resins is in the region of 60-64, whereas the Shore D hardness of the composite material of the invention, depending on the relative proportions of the components, is about 85. The finished articles or products also have good heat resistant and heat insulative properties, and are poorly flammable or non-flammable.

**Claims**

1. A composite material characterised in that it includes a polyester resin as a matrix: and particulate expanded polyurethane, dispersed within the matrix.

2. A composite material as claimed in claim 1 which comprises between 1 and 90% of the polyester resin matrix; and between 1 and 90% of particulate expanded polyurethane.

3. A composite material as claimed in claim 1 or 2 which includes at least one fibrous reinforcing material dispersed within the matrix, the fibrous material being glass fibres, carbon fibres, polyamide fibres, cotton fibres and/or wool fibres, with the fibrous reinforcing material being present in the composition in a proportion of between 1 and 60% by mass.

4. A composite material as claimed in any one of claims 1 to 3 which includes at least one additive admixed with the resin, the additive being magnesium silicide, talc, graphite, carbon black, silica, kaolin, an acid-resistant resinous material, a fire-retardant, thixotropic agent, or a pigment, with the additive being present in the composition in a proportion of between 1 and 40% by mass.

5. A composite material as claimed in any one of the preceding claims which is of mouldable consistency.

6. A composite material as claimed in claim 5 which includes a curing catalyst for the resin, admixed with the resin.

7. A composite material as claimed in claim 6 in which the curing catalyst is a thermosetting catalyst.

8. A composite material as claimed in any one of the preceding claims in which the expanded polymethane is a granulated or powdered foamed polyurethane having a particle size up to about 5 mm.